# EUROPEAN PATENT APPLICATION

(11) **EP 1 833 196 A1**
(43) Date of publication of application: **12.09.2007**
(21) Application number: 07101521.8
(22) Date of filing: 31.01.2007
(51) Int. Cl.: H04L 12/26, H04L 12/56

(54) **Switch testing in a communications network**

(30) Priority: 10.03.2006 US 373711
(71) Applicant: McData Corporation, Broomfield, CO 80021 (US)
(72) Inventor: Palacharla, Subbaroa, Portland, OR 97229 (US); Matesevac, Robert, Hummerstown, PA 17036 (US); Chan, Litko, San Jose, CA 95120 (US); Chamdani, Joseph, Santa Clara, CA 95051 (US)
(74) Representative: Moore, Barry

(57) **Abstract**

A method, system or switch device, the switch device having both switch and test capabilities. A method includes running in a test or switch mode or both; and, performing the testing operation or the switching operation, or both. Another method includes setting up the test functionality in the switch device, the test functionality including one or both of transmitting test data and receiving test data. Other steps may include initiating the transmission of test data; and checking the test data. A switch device may include an ASIC disposed within the switch device, the ASIC including one or both of an egress test block and an ingress test block; whereby the egress test block and the ingress test block are respectively adapted to transmit and receive a test packet; whereby the ASIC and one or both of the egress and ingress test blocks provide for alternatively operating in conventional switch mode and in test mode.

## Description

### Technical Field

This invention relates generally to computer and/or communications networks such as storage area networks, and more particularly to hardware, firmware and/or software for the testing of a switch in such a network.

### Background

A computer storage area network (SAN) may be implemented as a high-speed, special purpose network that interconnects one or more or a variety of different data storage devices with associated data servers on behalf of an oftenlarge network of users. Typically, a storage area network is part of or is otherwise connected to an overall network of computing resources for an enterprise. The storage area network may be clustered in close geographical proximity to other computing resources, such as mainframe computers, or it may alternatively or additionally extend to remote locations for various storage purposes whether for routine storage or for situational backup or archival storage using wide area network carrier technologies.

SANs or like networks can be complex systems with many interconnected computers, switches and storage devices. Often many switches are used in a SAN or a like network for connecting the various computing resources; such switches also being configurable in an interwoven fashion also known as a fabric.

Various limitations in switch hardware and/or switch architecture have been encountered. These can, for example, be size and scalability limits particularly in view of conventional chassis size limitations and/or due to device interconnectability restrictions. Other issues can be encountered in testing the devices and/or interconnections of devices in a network, particularly in a switch or switch system For example, in the conventional testing of a network switch; a device commonly called a traffic generator is connected to at least one port of a switch for the testing of that switch and the connections thereof to and within the network. The traffic generator generates and checks data traffic at the line rate of the ports on the switch, transmitting the traffic into the switch through at least one port on the switch. For full testing, traffic must be generated for and communicated to and through each of the switch ports, and thus the number of traffic flows and/or traffic generators required to test a switch increases linearly with the number of ports in/on a switch. As a result, the cost of testing large switches is getting larger with each new generation of switches. For example, fully loading a switch, which is also known as injecting traffic on all ports of the switch, of a currently available generation of switches can require as many as 256 separate traffic flows or generators for each of the possible 256 ports of such a switch. Moreover, this number will likely grow in the near term to as much as triple that, or more, for newer generation switches.

A further issue for testing particularly Fibre Channel switch devices is the ability to orchestrate control traffic scenarios typically encountered in large fabric settings. This requires traffic generators that can generate flexible patterns of control traffic. Unfortunately, currently available commercial traffic generators are lacking in this type of support.

### Summary

Implementations described and claimed herein may address one or more of the foregoing problems by providing improvements in methods, systems, hardware and/or architecture of computer or communication network systems. Briefly stated, a primary improvement may be in the provision of an apparatus or method for testing a switch, particularly, in providing a switch adapted to generate test data traffic in the form of packets or frames and communicate or transmit these to a second switch A further improvement includes the transforming of a switch device such that discrete traffic patterns may be generated by such a switch device for each of its ports, thus enabling the connection of each such port to a corresponding port on a device under test (DUT). This enables cost-effective testing of large switches, i.e., switches having large numbers of ports by using another comparably-sized switch to generate the test data traffic for each of the large numbers of ports of the DUT.

In more detail, provided here is a method, system or switch device, the switch device having both switch and test capabilities. A method includes running in a test or switch mode or both; and, performing the testing operation or the switching operation, or both. Another method includes setting up the test functionality in the switch device, the test functionality including one or both of transmitting test data and receiving test data. Other steps may include initiating the transmission of test data; and checking the test data. A switch device may include an ASIC disposed within the switch device, the ASIC including one or both of an egress test block and an ingress test block; whereby the egress test block and the ingress test block are respectively adapted to transmit and receive a test packet; whereby the ASIC and one or both of the egress and ingress test blocks provide for alternatively operating in conventional switch mode and in test mode.

The technology hereof increases the flexibility of use of one or more switch devices in the operation of a switch system

Accordingly the invention provides a switch device according to claim 1. Advantageous embodiments are provided in the dependent claims. A method of operating a switch device according to the independent method claim is also provided.

Other implementations are also described and recited herein.

### Brief Descriptions of the Drawing

In the drawings:

FIG. 1 illustrates an exemplary computing and storage framework which may include a local area network (LAN) and a storage area network (SAN).

FIG. 2, which includes sub-part FIGs. 2A, 2B and 2C, illustrates exemplary portion of networks particularly including either a standalone or a plurality of switch devices.

FIG. 3 illustrates a further exemplary portion of an exemplary network particularly including a plurality of switch devices.

FIG. 4 is a schematic view of some operable components within a switch device.

FIG. 5 is a further schematic view of some further operable components within a switch device.

FIG. 6 is a process diagram depicting an implementation of the described technology.

FIG. 7 is a further process diagram depicting another implementation of the described technology.

### Detailed Description

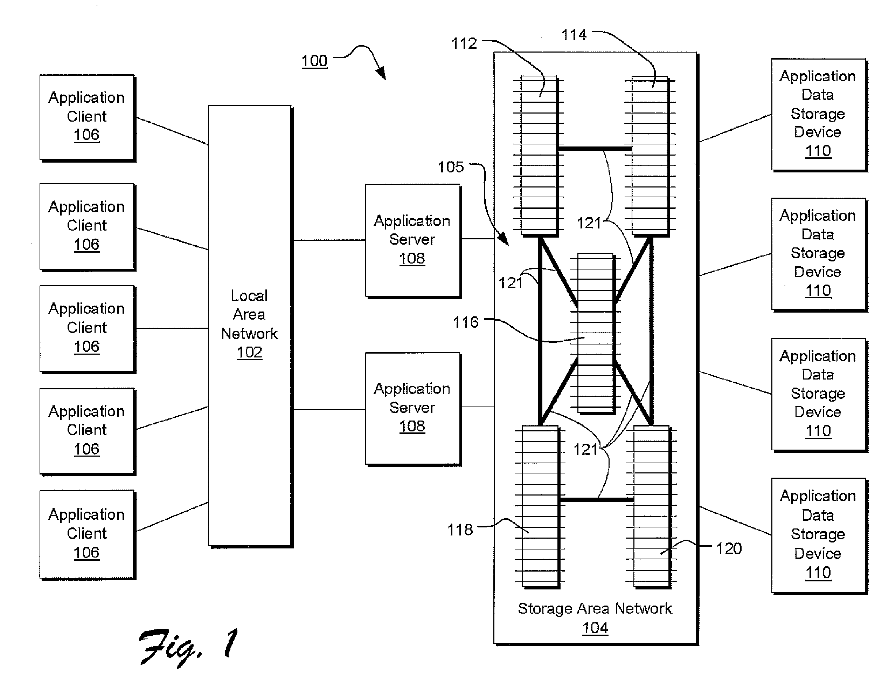

FIG. 1 illustrates an exemplary computing and storage framework 100 including a local area network (LAN) 102 and a storage area network (SAN) 104. Various application clients 106 are networked to representative application servers 108 via the LAN 102. Users can access applications resident on the application servers 108 through the application clients 106. The applications may depend on data (e.g., an email database) stored at/on one or more of the respective application data storage devices 110. Accordingly, the SAN 104 provides connectivity between the application servers 108 and the application data storage devices 110 to allow the applications to access the data they need to operate. It should be understood that a wide area network (WAN) may also be included oneither side of the application servers 108 (i.e., either combined with the LAN 102 or combined with the SAN 104).

One or more switches may be used in a network hereof, as for example the plurality of switches 112, 114, 116, 118 and 120 shown in the SAN 104 in FIG. 1. These switches 112-120 are often interconnected to provide a distributed redundant path configuration. Such distributed interconnections, identified generally as interconnections 121 in FIG. 1, create what may be referred to as a fabric 105. Each of the various switches may be connected in redundant manners via plural interconnections 121 to respective pluralities of other switches to ensure that if any particular connection between switches is not active for any reason, then a redundant path may be provided via the other connections and the other switches. Accordingly, such a distributed architecture of the fabric 105 can thus facilitate load balancing, enhance scalability, and improve fault tolerance within any particular switch.

Note, though only one fabric 105 is shown and described, many fabrics may be used in a SAN, as can many combinations and permutations of switches and switch connections. Commonly, such networks may be run onany of a variety of protocols such as the protocol known as Fibre Channel. These fabrics may also include a long-distance connection mechanism (not shown) such as asynchronous transfer mode (ATM) and/or Internet Protocol (IP) connections that enable sites to be separated by arbitrary distances.

Herein, the switches and/or the switching functions thereof are addressed as these reside within each particular switch device, particularly the switch devices hereof which are adapted to operate in alternative discrete modes, as described further below. These adaptabilities may be in the form of intelligence or other capabilities within the switch device to selectively operate in either or both of two discrete modes. Moreover, each of the switchdevices, as described further below, can be provided either in chassis blade form or in a modular form for operability in alternative modes, the modular form providing for standalone independent operation, as well as for stackable or rackable module or device configurations for interconnected operability as described further below. Note, the switches 112-120 shown for example in Fig. 1, may each be individual switch devices or may include a number or plurality of interconnected switch devices.

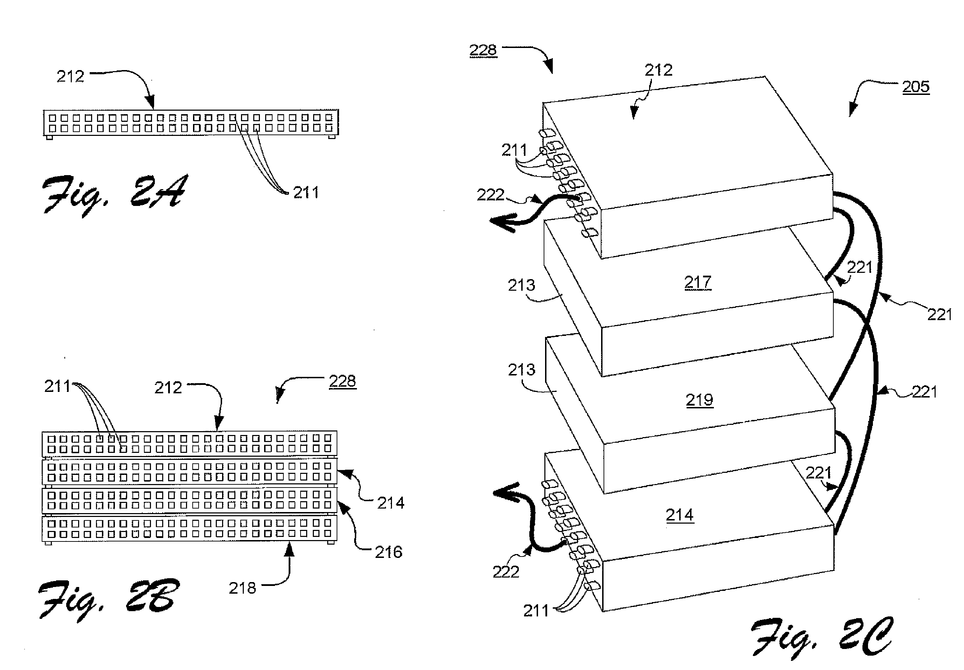

FIG. 2, in the respective sub-part FIGs. 2A, 2B and 2C thereof, illustrates exemplary switch devices 212, 214, 216, and 218 hereof connected in a variety of fashions. In FIG. 2A, a switch device 212 is shown as it might be disposed for standalone independent use. Shown in FIGs. 2B and 2C are respective stacks 228 of a plurality of switch devices, FIG. 2B including devices 212, 214, 216, and 218, and FIG. 2C including ported devices 212, 214 and unported devices 217 and 219 (note, the unported switch devices 217, 219 have unported front faces 213 as shown). Fibre Channel ports 211 of each ported switch device 212, 214, 216, and 218 may be connected to the Fibre Channel ports of the external devices such as those shown in FIG. 1, e.g., to the servers 108 and/or to the storage devices 110. These connections may be made by optical cabling 222 or wired cabling, such as copper cabling (either or both schematically shown in FIG. 2C). If connected together as in FIGs. 2B and 2C, the switch devices may be connected by dedicated non-standard ports via dedicated cabling 221 as shown most particularly in FIG. 2C (note, these dedicated ports are also referred to herein as extender ports as described below). A switch system 205 of switching alternatives may thus be created. Each illustrated switch device may have separate power supplies and cooling mechanisms, although individual switch devices may share power supplies and/or cooling mechanisms in alternative configurations. Note, the switch devices used as building blocks for any of these operational examples may also be referred to as modules, in either case, the switch devices and or modules generally being respective enclosed packages that may be independently operable (as for example, being capable of providing their own cooling and their own power), as opposed to switches in a blade form, which are dependent for operability on a chassis (as e.g., for cooling and power).

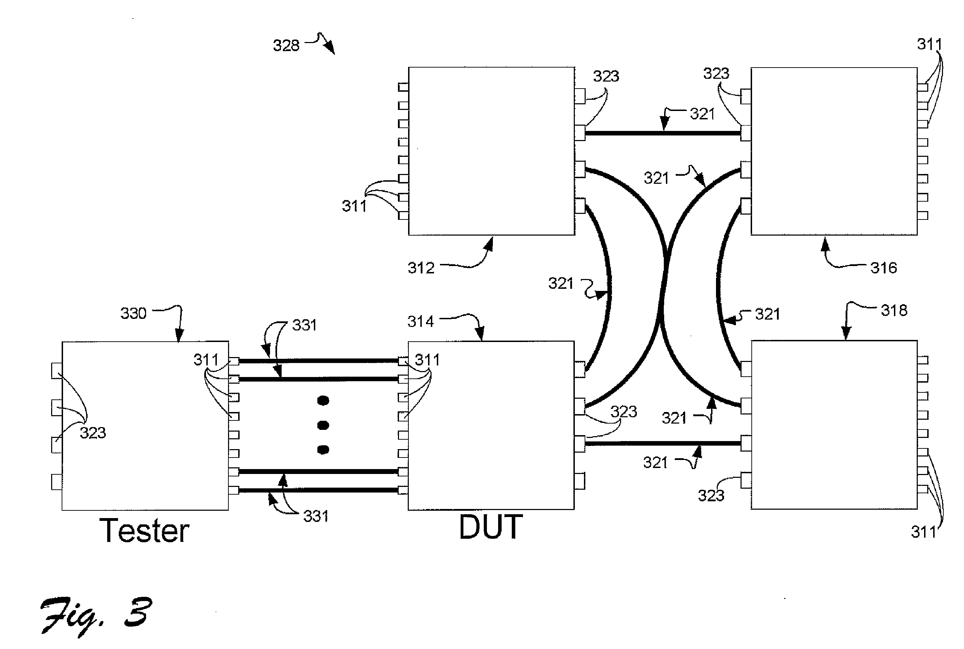

A ported switch device according hereto at least provides conventional user ports and basic switching. Such a switch device will also/alternatively be referred to as an intelligent ported switch device herein. As introduced above, in one implementation, a single ported switch device may operate as a stand-alone switch (see FIG. 2A). In an alternative implementation, multiple ported switch devices may be interconnected (FIGs. 2B and 2C) via dedicated extender ports (shown in FIG. 3, see below) to provide a switch system with a larger number of user ports. Interconnection by such dedicated extender ports avoids consumption of eachdevice's user ports and therefore enhances the scalability of the switch system. Note, the ported switch devices described herein are distinct from and may be contrasted with the unported or non-ported switch devices (see FIG. 2C) also known and used in many implementations for connecting two or more ported switch devices together. Both of the ported and unported switch devices are adapted to provide switching functions and the ported switch device providing user ports for connection to external devices, the unported or non-ported (unported and non-ported being used interchangeably herein) switch device not including such external device connection ports. Note, the use of the non-standard extender ports shown and described may provide non-standard high performance relative to what may be provided by a standard port protocol (e.g., Fibre Channel) which would have a blocking interconnection. Such non-standard ports may be used in a variety of connection schemes; whether in loopback connections of a device to itself, whether between ported switch devices (also referred to as a stackable configuration) or between ported and unported switch devices (also referred to as a rackable configuration). Though not typical, connections may in some alternatives be made between and amongst ported switch devices as well as between and/or amongst unported switch devices.

In an implementation hereof as introduced above, multiple ported switch devices 212, 214, 216 and/or 218, or like de vices 312, 314, 316 and/or 318 as shown in FIG. 3, can be connected to each other via cabling betweendedicated extender ports 323 (discrete from the standard user ports 311 shown in FIG. 3) in what in the shown implementations are the backs of the switch devices 312-318. Such cabling replaces the chassis hardware backplane or midplane connection board, and as such may be referred to herein as a "soft backplane." This exemplary back connection scheme shown in FIG. 3 is of a stack 328 like stack 228 of FIG. 2B. In such an example, the respective ported switch devices 312, 314, 316 and 318 are shown connected to each of the other respective ported switch devices 312, 314, 316 and 318. These connections are shown via the cables 321 and the back ports 323 at the respective rear sides of the devices 312, 314, 316 and 318. This is in contradistinction to the substantially conventional ported connections of similar such ported switch devices via either a hard back or mid-plane connection or connection through the front ports 311. The front ports 311 would generally remain operable in a conventional or standardized protocol such as the Fibre Channel protocol, while the back ports 323 connected by cables 321 may be operable using an alternative non-standardized protocol.

Moreover, FIG. 3 shows a further switching device 330 connected by one or a plurality of connections 331 to a networked ported switch device, here device 314. The se connections 331 are via respective conventional ports 311 of the respective switch devices 330 and 314. In this way, a switch device, such as device 330, which is adapted to provide test traffic as described herein, will be able to communicate the test traffic to the device to be tested, here device 314. Thus, FIG. 3 shows at least schematically how at least one implementation hereof may be used. The device 314, which may be referred to as a Switch Under Test or a Device Under Test (DUT), is a network switch that can be tested in this arrangement by having traffic injected on its front ports 311 by the connected device 330. The device 330, which may also be referred to as a Tester in this arrangement, can be a network switch like any of these others (at least inasmuch as it may be adapted to operate as a normal switch), that has been augmented as described herein (with apparatus and/or software or other capability) to generate traffic for test purposes.

Note, in primary implementations, the switch device 330 may preferably be a switch device fully capable of operating as a switch alone or in combination with one or more other switch devices, as for example in and /or with the stack 328 of FIG. 3 (though not so shown in FIG. 3). Then, the switch device may further have the capability of or be adapted to transform into a traffic generator for the purposes described here. Thus, the Tester 330 can be derived from or be another instance of a switch such as the Switch Under Test, DUT 330; or, in other implementations, maybe of a different form or different generation of switch, as by being derived from or an adapted version of a previous or subsequent generation switch.

A further improvement includes the transforming of a switch device 330 such that discrete traffic patterns may be generated by such a switch device 330 for each of its ports, thus enabling the connection of each such port to a corresponding port on a de vice under test (DUT) 314. This enables cost-effective testing of large switches, i.e., switches having large numbers of ports by using another comparably-sized switch to generate the test data traffic for each of the large numbers of ports of the DUT.

In many implementations, the test traffic may be generated under software control, such software being adapted to run on the Tester 330 and orchestrate test traffic. Note further that additional hardware may be disposed in the Tester 330 to generate or assist in generation of the traffic on and communicated through the front ports 311 thereof. Note further that in some implementations, the software on the Tester may validate or orchestrate the validation of the test traffic upon return from the DUT 314. Moreover, the software may configure the additional hardware (if used) in the Tester 330 to validate traffic switched by the DUT 314 and received by the Tester 330.

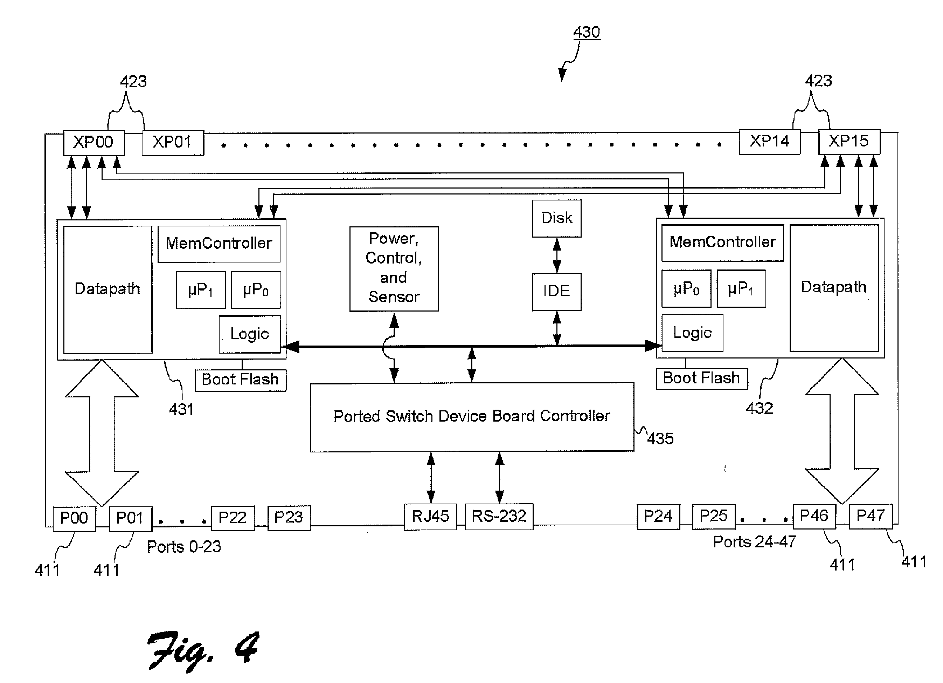

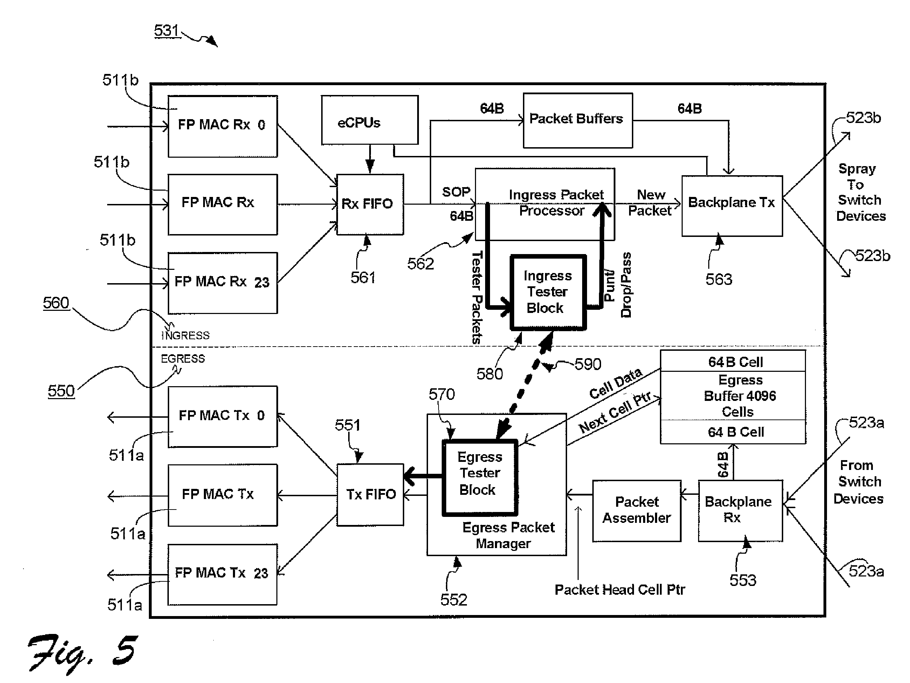

A preferred implementation of a Tester switch 330 is described in relation to the following FIGs. 4 and 5. First, in the making of a ported switch device 330 operational such that it may either operate to provide typical switching (as it might in either a standalone or an interconnected mode, see FIG. 2) or to provide testing, including either or both test traffic generation and/or validation, may involve an adaptation of a ported switch device such that logic (hardware, software, firmware or any combination thereof) is incorporated into an otherwise typical switch device, logic which may be used to generate test data traffic and/or to validate returning test data traffic. Then, the switch device can execute and provide for either switching in typical switch mode or provide for testing by generating and communicating the test data to the connected DUT.

Providing such logic for reaching these capabilities and/or providing for these altered operational states may be implemented through use of one or more components within the ported switch device. FIG. 4 schematically illustrates an exemplar ported switch device 430, which has a plurality of components or componentry for conventional switch operations. For example, in this implementation the switch device 430 includes forty-eight (48) user ports 411 (also referred to as front ports) and sixteen (16) extender ports 423 (also referred to as X ports - XP00 through XP15). The ported switch device 430 may also support a management Ethernet interface (RJ45) and/or a serial interface (RS-232). Internally, the ported switch device 430 may include at least one Application Specific Integrated Circuit (ASIC), here shown including two switchASICs 431 and 432, wherein each ASIC may include or be associated with at least one, but here shown including two individual embedded processor cores, a port intelligence processor (PIP) and high level processor (HLP) (e.g., 666 MHz PowerPC 440SPs or some other processor core), these being arbitrarily designated µP0 and µP1 in each of the respective ASICs 431, 432 of FIG. 4. The processors here share access to common DRAM and flash memory through the illustrated memory controller in each ASIC. A device board co ntroller 435 may also be included to manage any arbitration between the ASICs and/or to manage ancillary functions such as device control Ethernet port, or other interface control, display, status LEDs (front and/or back), Real Time Clock (RTC), and/or Vital Product Data (VPD) EEPROM, inter alia. The ported switch device 430 may also include, inter alia, a power supply and cooling features (e.g., one or more fans), although alternative configurations may receive power from a common (i.e., shared with one or more other devices) power supply and/or receive cooling from a common cooling feature. The device board controller may also control these power and cooling features (e.g., power-on reset events, power failure interrupts, fan speed).

Each ASIC may provide, among other functions, a switched datapath between a subset of the user ports 411 and the extender ports 423. For a stand-alone ported switch device, its extender ports may be cabled together with loopback cables (in an implementation hereof, each of the extender ports may be connected with loopbacks to another extender port). For a stacked configuration, the extender ports of the ported devices are cabled together as shown for example in FIGs. 2B and 3. For a racked configuration as shown in FIG. 2C, the extender ports of the ported devices and non-ported switch devices are cabled together. In one implementation, the extender ports are cabled using four parallel bi-directional optical fiber or high-speed copper links, although other configurations are contemplated. Note also that communications between processors of different ASICs of the same ported switch device as well as processors of different ported switch devices can thus communicate through the switching interconnections with any other processor in the switch system.

Moreover in accordance with many implementations hereof as shown in more detail in FIG. 5, each ported switch device ASIC, as for example the shownASIC 531, may include an Egress Tester Block (ETB) 570 and an Ingress Tester Block (ITB) 580 embedded therewithin. These may represent hardware hooks for traffic generation and/or validation in the ASIC. More particularly, the Egress Tester Block 570 may be given the responsibility for generating packets or frames for test purposes hereunder. These packets or frames may include packets or frames which mimic real/actual (non-test) data flow with embedded control information used to identify them as test frames for test identification purposes. The embedded control information may include special reserved values for certain frame fields and other unique identifiers that identify test frames from normal traffic frames because there could be normal traffic flow running at the same time. The generation of these packets or frames may be under either user or software control as described further below. Note, the Tester hereof may be adapted to be able to generate packets or frames of either or both data and/or control (control packets or frames generally being different from data packets or frames; wherein, typically, data packets or frames are received and forwarded completely in hardware, and control packets or frames are typically received by the hardware and forwarded to firmware running on one or more CPUs inside the switch; the firmware then analyzing the control packet or frame and sending a response (accept or reject or none) to the originating device/port.). In the primary implementations hereof, to uniquely identify the data packets or frames it sends, the Tester hereof may embed some unique identifiers in the data packets or frames. The Tester may also add information like a sequence number of the packet or frame in the payload/unused header fields so that on the receiving side packet or frame ordering can be checked. However, in many implementations hereof, when the Tester sends control packets or frames, it typically sends the control packet or frame as is without changing any field since the firmware is going to process the control packet or frame and might look at all fields. Also, the firmware will typically send a response packet or frame that might not be related to the contents of the original control packet or frame. The Tester would then send the control packet or frame and wait for the expected response packet or frame if there will be one.

The Ingress Tester Block 580 may be given responsibility for checking or validating data packets or frames and control frames received by the ASIC, including the test frames. These test frames to be checked hereby were generated by a previously programmed Egress Tester Block that is either local (i.e., the Egress Tester Block 570 on the same ASIC 531) or remote (on a different ASIC (not shown)). Note, checking and validation (and other alternatives not fully elucidated) may involve bare checks, as for example of return of complete packets, or may involve more thorough review steps, such as parsing headers for identification and/or other indicia and/or perhaps consulting with one or more look-up or forwarding tables for determinations of appropriate reactions. The spectrum of possible checks or validation steps are intended as encompassed herewithin in all such terms useful herewith.

Software (or firmware or even other hardware, or some combination hereof) may be used to initiate traffic generation by programming the Egress Tester Block (ETB) 570 and the Ingress Tester Block (ITB) 580 for each traffic flow. Note, such software (or its firmware/hardware alternative) may be disposed on/in the ASIC or outside the ASIC and be in communication therewith. The Egress Tester Block 570 may be programmed or otherwise set-up (e.g., initialized, configured, *et cetera*) based on the type of traffic to be generated, as for example, by the protocol type (e.g., Fibre Channel or Ethernet), frame length, number of frames, *et cetera.* Software may be used to configure (initialized, programmed, etc.) the Ingress Tester Block 580, which may thus be programmed with information that tells the hardware the type and number and type of frames (e.g., what packets and control frames to expect) expected on a particular port. These control steps might be generalized as setting up the test functionalities of the respective blocks. The Egress Tester Block and Ingress Tester Block entry for a give n traffic flow might reside on different ASICs. Software may then use existing software communication facilities in conventional switches to access Egress Tester Blocks and/or Ingress Tester Blocks ETBs/ITBs in remote ASICs.

During a test, the Ingress Tester Block 580 may notify when it receives unexpected or bad frames. Such a notification may be of and/or to software (or other hardware or firmware (not shown)) for further action, as in notifying a user or otherwise indicating test performance. In many implementations, the Ingress Tester Block 580 can be further configured by software to either pass packet flows as when there are no test problems, or if there are discrepancies, the Ingress Tester Block 580 may be configured to punt or drop data frames that are corrupted or received out of order. Punting data frames is an operation of kicking the error to the central processing unit or other control system for further processing of or determination of the quality or nature or other issue concerning the error. A drop operation is one in which the Ingress Tester Block 580 may simply reject the packet or data flow with no further action necessary. Alternatively, and/or in addition, the Ingress Tester Block may be configured to maintain one or more counters (hardware, software, firmware or some combination thereof) to keep track of the number of frames and/or bytes received on each front port. Software can use these counters to compute real time data bandwidth achieved on the front ports. In addition to data traffic, the Egress Tester Block and/or Ingress Tester Block (ETB/ITB) hardware can be programmed to generate flexible control traffic patterns. Flexible control traffic patterns better mimic scenarios typically encountered in large fabric settings, thus providing more appropriate testing for actual operating conditions.

Operation in some more detail will now be described. In the ASIC 531 of FIG. 5, the components have been shown divided into egress and ingress portions 550 and 560 (this is done relatively schematically here, as many of these components may operate in both or either ingress and egress fashions at various times). For example, a plurality of egress front ports 511a are distinguished from a plurality of ingress front ports 511b. In such a set-up, the egress front ports 511a are represented by MAC transmitters (MAC Tx), and the ingress front ports 511b represented by MAC receivers (MAC RX). These ports are communicative with respective transmitter and receiver FIFOs 551, 561, which are in turn, respectively communicative with the egress packet manager 552 and the ingress packet processor 562. Thus, in typical operation, data which enters a switch, here switch 531 via a front port, here a port 511b, then travels through the MAC Rx and Rx FIFO 561 to the Ingress Packet processor 562 where it is determined how and where to send the data (often with the help of one or more eCPUs and/or Packet Buffers). Typical data would usually, ultimately be determined to be communicated out a back port 523b to a corresponding other switch device (not shown in FIG. 5) via a back port or backplane transmitter (Tx) 563. In similar fashion, data may be received on a backplane/back port 523a and communicated from there via a backplane receiver (Rx) 553 to the egress packet manager 552 (perhaps with the assistance of a packet assembler, inter alia). The packet may then be communicated through the Tx FIFO 551 to an appropriate MAC transmitter (Tx) and port 511 a for exit communication. In this way, the data is switched from one device to and through another (although local switching within a particular switch device may alternatively be accomplished), ultimately to be communicated to the receiving device, as for example a storage device or a server as shown in FIG. 1.

However, in test scenarios, the additional egress and ingress tester blocks may then become involved. Note, the respective egress and ingress tester blocks 570, 580 may be parts or features of or may merely be connected to, or may even alternatively be disassociated from the respective egress packet manager 552 and ingress packet processor 562; the association shown in FIG. 5 being schematic of initially appreciable implementations. In any case, in a first test implementation scenario, an egress tester block 570 provides or generates test packets which can be communicated as shown in FIG. 5 via the Tx FIFO 551 and appropriate MAC transmitters and front ports 511a to an external Device Under Test (see e.g., DUT 314 in FIG. 3). In this first implementation, the test generation capability may alone reside on the ASIC 531 (i.e., without a corresponding Ingress Tester Block 580), and receipt and validation of the resulting test data may be external to the ASIC 531 and/or external to the switch device in which the ASIC 531 resides. Thus, in some other implementations, it may be that an Ingress Tester block 580 may reside in/on an ASIC 531 without a corresponding Egress Tester Block, suchan Ingress Tester Block 580 receiving test data generated by remote test data generators. In such an alternative implementation, test data may be received on a port 511b, and transmitted via the receiver (Rx) MAC and Rx FIFO 561 to the Ingress Packet Processor 562 as shown in FIG. 5. Here, the data may be identified as test data and diverted to or otherwise communicated to the Ingress Tester Block 580 for the Pass/Punt/Drop determination described above.

As mentioned, either or both of these alternative implementations may achieve satisfactory test effectiveness; however, in many implementations, an egress tester block 570 and an ingress tester block 580 may co-reside on/in a particular ASIC 531 or may be otherwise associated with such an ASIC 531 (it could be that these blocks and/or their functionalities may be disassociated structurally or otherwise from the ASIC, but will still be operative therewith as described here). Thus, test data generated by a particular egress block 570 may be destined for, received and processed by the particular ingress block 580 co-resident on/in a particular ASIC 531. Even so, the operations or co-operations of the respective egress and ingress blocks 570, 580 may be of a variety of types. In a first alternative here, the operations of the egress and ingress blocks may be relatively or substantially independent inasmuch as they may not be configured to nor in any other fashion have specific knowledge or operability relative to each other. That is they may be independent other than the egress test block generating test data which is received and interpreted by the ingress test block. This sort of operation may be enabled by respective pre-configurations of these blocks to respectively generate certain test packets and correspondingly appreciate these test packets upon receipt.

However, greater flexibility may be had with co-operation between these blocks, whether provided wholly or in part by external software (or equivalent control means), or whether provided by substantially direct communication between the respective blocks 570, 580. In a first example of external software (or like) control, the software may be given responsibility for coordinating the test data, by either or both, communicating to the ingress block 580 what test data to expect and/or communicating to the egress block 570 what test data to generate and transmit. By providing for such control or synchronization, a greater variety of test data may be generated and validated, such a greater variety providing more options for replicating or substantially imitating a larger variety of real- world options of data communications networks. Better tests may then be performed.

Similarly, a direct or substantially direct communication may be provided between the respective egress and ingress test blocks 570 and 580; such a communication likewise providing for substantially direct synchronization and thus greater testing variety and consequent better tests. Note, without software control, the system of the test blocks 570, 580 may provide a sort of self-control, communicating directly with each other and responding directly to such input. An exemplar direct communication is shown in FIG. 5 by the dashed line arrow labeled 590 (in some implementations, a hard-wire connection). In a first example of such a communication, the egress block 570 can communicate directly to the ingress block 580 what test data it is sending to the DUT so that the ingress block 580 will then know what to expect. This sort of communication can be useful particularly if there may be any sort of randomness in the data generated by the egress block 570, or if and/or when there may be unique port interconnections of which the egress block is aware that the ingress block does not know. Moreover, it may be that an external control, whether by software, or by a user (user control), or otherwise may communicate test desires to the egress block, thus, the egress block may communicate this varied test information to the ingress block.

Alternatively, or in addition, the ingress block 580 may be configured to communicate test information to the egress block 570. In such a situation, the ingress block 580 may communicate success information or failure information or both. For example, it may be that successful test information may be useful for the test generator of the egress block to generate new and/or different test data of a varied type. Similarly, failure information could be useful for the generation of re-test, or more specific test data generation as for example may be directed at a particular failed port. In many implementations, this sort of direct communication will be faster than externally-driven software control.

Moreover, such direct communication may be of a sort which is periodic or some other frequency, or substantially continuous or only upon demand or other triggering occurrence. Thus, an egress block 570 may be set to communicate periodically or substantially continuously to the ingress block 580 what test data are being transmitted. Or, the ingress block 580 may communicate in a similar fashion, e.g., periodically or substantially continuously, the test results back to the egress block 570. In either case, the receiver of the communication will then have the responsibility for interpreting the communication and behaving accordingly. An example here may be when the egress block 570 is set to transmit a set number of test frames (e.g., 10 in one example), and then await a communication (or failure of communication) from the ingress block 580 which may indicate either success or failure (depending upon the pre-determined significance established for a particular communication (or lack thereof)). The egress block may then act accordingly, as for example to either send the next set number of frames, or alternatively to perform another action, as for example, to send a re-test, or a more dedicated test to explore a possible switch or connection failure. Such may be considered a form of partial support wherein the communication between blocks is not so much as to exert total control over the operation of the communication-receiving block. A full control example, on the other hand, may be one in which the egress block always (or substantially always) awaits a communication from the ingress block before sending the next frame. This latter test operation of verification of each test frame before sending the next frame (the egress block awaiting a verification response before each transmission) may provide a high degree of synchronization and thus test control. A new test frame and/or test strategy can be generated in a substantially immediate response to the ingress failure/success determination communication, frame by frame.

In a typical control frame exchange, the source port/Tester port sends a control frame and waits for a response before sending the next control frame. For example, a PLOGI control frame in Fibre Channel is used by a port/device to log into a switch's name server. The port/device sends the PLOGI frame and then waits for a response. A response is one of an ACC frame (accept), an RJT frame (reject), or no response (time out). In this particular case, the egress tester block will send the PLOGI and then wait for confirmation from the ingress tester block that a response was received before sending the next control frame.

Note, any of these sorts of direct egress/ingress test block communications can provide a test enhancement over conventional testers which have heretofore required the use of software evaluation of test results. Such a software evaluation would break the loop of efficiency described here; i.e., where a test frame is transmitted, checked (verified or failed), and communicated back to the tester, an appropriate next test frame then being transmitted. Note, either of the ingress and/or the egress blocks may be given the responsibility/capability of determining what would be an appropriate next test frame upon a success or failure determination/communication.

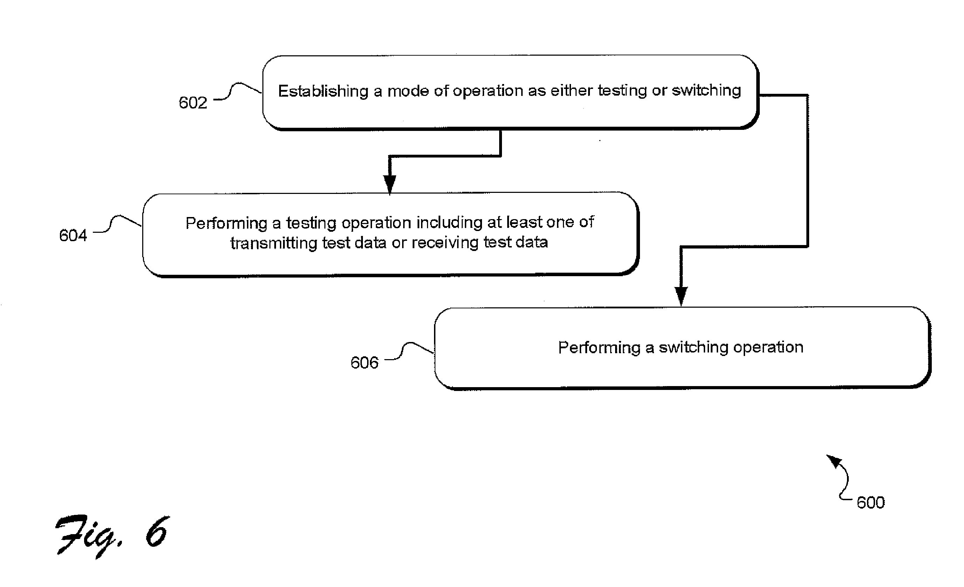

A first generalized exemplar method of implementation is presented in FIG. 6. In general, a method 600 of operating a switch hereof includes first having the switch be established in a particular mode of operation as either in testing or switching mode as shown by the first operation 602. Then, the switchperforms either, according to step 604, a testing operation, or, according to step 606, an operation of switching data. In the operation 604, there are two or more optional sub-operations. For example, the testing operation may include either or both the transmitting of test data and/or the receiving of test data. These operations in their variety of alternative combinations are described in some detail above relative to FIG. 5, inter alia, and most particularly as they may involve the respective egress and ingress tester blocks 570 and 580. On the other hand, the alternative of performing a switching operation 606 would occur according to otherwise conventional switching knowledge and capabilities. Conventional includes those technologies known prior to this disclosure as well as those to be published substantially concurrently herewith, and/or to be developed.

Note, the operation of performing switch testing may include many options including using software controls and/or using direct or substantially direct communication between the respective egress and/or ingress test blocks. These may further include partial controls where the egress block generates and/or transmits test data periodically, at intervals, on a set frequency, substantially continuously or upon demand or another triggering occurrence. Full control options are also available, as where the egress block sends only one set of data at a time and awaits a communication from the ingress block. Other options may be as described herein or as may be appreciated in the art.

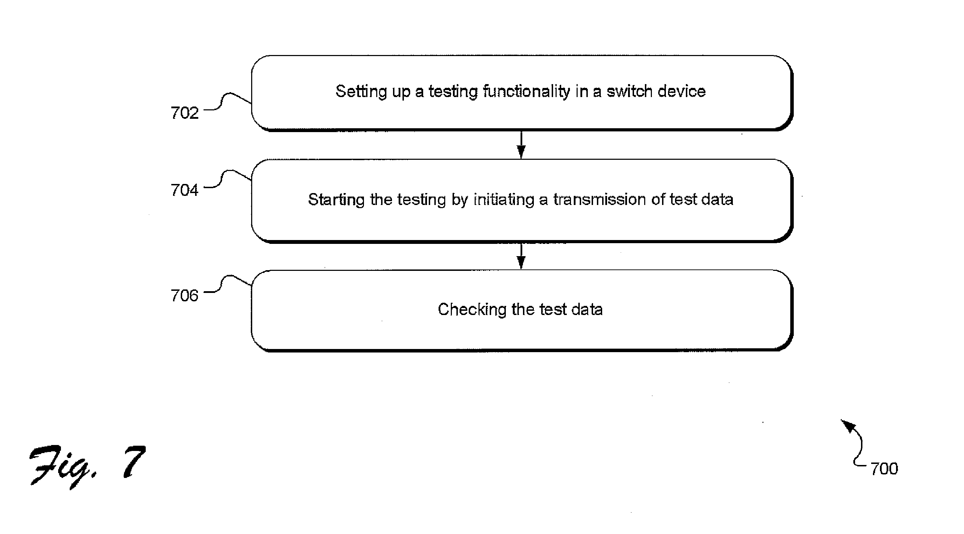

A further detailed test process 700 is shown for example in FIG. 7 wherein a first operation 702 includes a control functionality being involved in setting up a testing functionality in a switch device. In one example, this may be a software control which communicates or is involved in communication to the egress test block which test data to generate and/or transmit; or, the software control may communicate or be involved in communicating to the ingress test data block what test data to expect. Other controls according hereto may be one or more of the looped controls of the communications directly between the egress and ingress test blocks. User controls may also be included here. The next operation in the test process 700 is an initiation operation 704 of the actual testing by the initiation of the transmission of test data. This may be by the egress test block itself, or by other control, as from an initiation signal from the ingress test block, or from else where, as for example, from external software controls. The next operation 706 is of checking the test data, as may be performed by the ingress test data block. This may include other sub-operations, such as the success/failure determination and/or the pass/punt/drop determination and/or any assist from any other device or block to validate or fail the test data received.

Some user control implementations of a Tester hereof may include exportation of one or more high- level commands in software and then allowing the test writer write a test in Tcl (software programming language) that invokes one or more of the commands on one or more specified tester ports. This may be considered a concept of a test/test script to control a Tester.

The test processes 604 and/or 700 may be complete in themselves, or may include sub-processes such as including recognition of the connected devices, if any; or they may include or be included in an initialization or handshaking operation between devices. There may be negotiations between devices and/or there may be agreement or disagreement involved as well before and/or during the test process. For example, there may be agreement or disagreement between two ported switch devices about the connection or recognition operation. These may be separate from or may be part of the test process(es). There may be separate confirmation and/or verification operation(s); or there may be separate establishment operatio ns. Or, any or all of these operations may be implicit within the test process itself, i.e., where a discovery request is sent by one device to another, there may be an implicit determination of the connection based upon the response or lack thereof. Thus, the test operation or the separate discovery may itself establish to the satisfaction of the respective devices what is and how the connection of devices is accomplished so that operation of the test and/or of the switch system may commence.

As a further operation, a look-up table can be used for determinations of the identifications of data cells or packets as either being test data or otherwise, and/or for determining which types of test data they represent. Such a table can be used by each of the respective blocks in a system, i.e. of the egress and ingress blocks.

Ultimately, the test process is an adjunct to switch operations which may take place before, during or after the test operation. Thus, the operation of the switch fabric may then be achieved at any time vis-a-vis the test operation In this, operational data frames may then be sent through the switch system before, during or after the routing of test data frames for testing as described herein above.

The embodiments of the invention described herein may be implemented as logical steps in one or more computer systems. The logical operations hereof may thus be implemented (1) as a sequence of processor-implemented steps executing in one or more computer systems and (2) as interconnected machine or circuit modules within one or more computer systems. The implementation is a matter of choice, dependent on the performance requirements of the computer system implementing the invention. Accordingly, the logical operations making up the embodiments of the invention described herein are referred to variously as operations, steps, objects, or modules. Furthermore, it should be understood that logical operations may be performed in any order, unless explicitly claimed otherwise or a specific order is inherently necessitated by the claim language.

In some implementations, articles of manufacture are provided as computer program products. One implementation of a computer program product provides a computer program storage medium readable by a computer system and encoding a computer program. Another implementation of a computer program product may be provided in a computer data signal embodied in a carrier wave or other communication media by a computing system and encoding the computer program.

From a hardware standpoint, as mentioned, the making of the ported switch device operational in either a test mode or in the switching mode may further involve an adaptation of a ported switch device such that it will perform both. Thus, any hardware, firmware or software which can fulfill the functionality of the respective test blocks 570 and 580 is intended herewithin.

Typically, the switch devices of a switch system are interconnected via high-speed parallel optic transceivers (or their short haul copper equivalent) called extender ports and four lane bidirectional cables called XP links. Two discrete devices are normally connected by at least two cables containing eight or more bi-directional fibre pairs; user traffic enters and leaves the system as frames or packets but it transmits over the XP links in parallel as small cells, each with a payload of (approximately) 64 bytes. XP links can carry device-to-device control information in combination with user Fibre Channel and Ethernet data between ported switch devices and non-ported switch devices. The test operation 604 and/or 700 involves the transmission of a test packet to the device cabled to each of a test device's front ports and receives response information from the device.

It may be that the "front" and "back" modifiers used herein are not necessary and may indeed inaccurately describe implementations that are nevertheless within the scope hereof. Thus, the backplane transmitter module may simply be a transmitter module, or transmit control module. Similarly, the front and back ports are merely meant to be distinguished from each other and not limited to such dispositions in/on a device hereof. The front ports hereof may thus also be referred to as substantially standard switch ports and the back ports hereof may be referred to as extender ports which operate on a discrete protocol from the standard ports. It should be understood that the hardware architectures, particularly those illustrated in FIGs. 4 and 5 and described herein are merely exemplary and that ported switch devices and other switch devices ported or otherwise may take other forms.

The apparatus and method hereof may provide one or more of the following benefits. This invention describes an apparatus that morphs the ports on a switch into traffic generators under software control. This enables cost-effective testing of large switches by using the ports of a switch as traffic generators. This technology enables flexible control traffic generation. In addition to typical control traffic, the apparatus described here can generate line rate I/O traffic that is Fibre Channel FC-2 compliant. They may reduce the total system cost particularly for large fabric configurations. Provided also are cost-effective large fabric testing; generating traffic of frames with new headers e.g., virtual fabric tagging and inter-fabric routing headers; multiprotocol frame generation e.g., Fibre Channel and Ethernet; the ability to generate line-rate traffic at all port speeds (e.g., 8Gb/s and 10Gb/s) supported by a switch; emulation of control traffic scenarios in large switch systems and/or fabrics; improved online and offline system diagnostics; improved manufacturing testing; and improved ASIC testing.

The above specification, examples and data provide a complete description of the structure and use of exemplary embodiments of the invention. Since many embodiments of the invention can be made without departing from the spirit and scope of the invention, the invention resides in the claims hereinafter appended. Furthermore, structural features of the different embodiments may be combined in yet another embodiment without departing from the claims.

The invention also provides one or more of the features of the following paragraphs which may be implemented independently or co-operatively with one another:

A switch device which is adapted to be operable as a switch, as well as being adapted to provide a switch testing capability; the switch device comprising:
a housing containing:
   an ASIC disposed within the switch device, the ASIC including switching componentry and associated therewith, one or both of an egress test block and an ingress test block; whereby the switching componentry is disposed to receive or transmit a packet, and the egress test block and an ingress test block are respectively adapted to transmit and receive a test packet;
   an ingress port communicating with the ASIC and being connectable to one or more external computer network devices, the ingress port being a substantially standard switch port;
   an egress port communicating with the ASIC and being connectable to one or more external computer network devices, the egress port being a substantially standard switch port; and,
   whereby the ASIC and one or both of an egress test block and an ingress test block are adapted to provide for alternatively operating in conventional switch mode and test mode.

A switch device according to Paragraph [0061] which includes a plurality of discrete egress ports; whereby the egress test block is adapted to generate discrete traffic patterns for each of the plurality of discrete egress ports.

A switch device according to Paragraph [0061] which includes one or both of an egress and an ingress test block and whereby in test mode, one or both of: the egress test block transmits a test packet through the egress port; and the ingress test block receives a test packet on the ingress port.

A switch device according to Paragraph [0061] which includes both an egress test block and an ingress test block and whereby in test mode, the egress test block transmits a test packet through the egress port, and the ingress test block receives a test packet through the ingress port.

A switch device according to Paragraph [0064] wherein the egress test block and the ingress test block operate in one or more of independently, co-operatively, co-operatively with partial support and co- operatively with full support.

A switch device according to Paragraph [0065] wherein one or both of the egress test block and the ingress test block operate under one or more of software control, user control and self-control.

A switch device according to Paragraph [0066] wherein the egress test block and the ingress test block operate under self-control, and,
wherein the self-control includes communication between the egress test block and the ingress test block.

A switch device according to Paragraph [0067] wherein the communication between the egress test block and the ingress test block includes one or more of communication from the egress test block to the ingress test block, communication from the ingress test block to the egress test block, or both.

A switch device according to Paragraph [0067] wherein the communication between the egress test block and the ingress test block includes communication from the ingress test block to the egress test block, and
wherein the egress test block awaits a communication from the ingress test block before transmitting a test packet.

A switch device according to Paragraph [0069] wherein the egress test block and ingress test block operate in one of partial support and full support.

A switch device according to Paragraph [0061] wherein the ingress test block is adapted to validate the test packet, and whereby the validation is one of success/failure and pass/punt/drop.

A method of operating a switch device according to Paragraph [0061] wherein the method includes operating the switch device in either of the switching mode and the testing mode.

A system of a two switch devices, each of said devices having the limitations of the switch device of Paragraph [0061]; wherein the two switch devices are connected each one to each other via connections between the respective ingress and egress ports thereof, and wherein the ASICs of each switch device are adapted to both transmit and receive a packet to the other connected switch device via the connections between the respective ports thereof; and wherein the ASICs are adapted to transmit a test packet and to receive a test packet.

A method of operating a switch device having both switch and test capabilities, the method including:
establishing a mode of operation in either or both of a test mode and a switch mode; and,
performing one or both of a testing operation and a switching operation.

A method according to Paragraph [0074] wherein the performing operation includes performing a testing operation and the testing operation includes one or both of:
transmitting test data; and,
receiving test data.

A method according to Paragraph [0075] wherein the switch device is a test switch device and the test switch device is connected to a switch device under test; whereby in the one or both operations of transmitting test data and receiving test data, either or both of the test data is generated by and transmitted by the test switch device to the switch device under test; and, the test data is received from the switch device under test by the test switch device.

A method according to Paragraph [0076] wherein the receiving of test data further includes checking the test packet, and whereby the checking operation includes a determination of one of: success or failure; and pass or punt or drop.

A method of operating a test functionality of a switch device having both a test functionality and a switch functionality, the method comprising:
setting up the test functionality in the switch device, the test functionality including one or both of transmitting test data and receiving test data;
initiating the transmission of test data; and
checking the test data.

A method according to Paragraph [0078] wherein one or both of the operations of transmitting test data and receiving test data operate under one or more of software control, user control and self-control.

A method according to Paragraph [0079] wherein one or both of the operations of transmitting test data and receiving test data operate under self-control, and,
wherein the self-control includes communication between the egress test block and the ingress test block.

## Claims

1. A switch device which is adapted to be operable as a switch as well as being adapted to provide a switch testing capability; the switch device comprising:
a housing containing:
an ASIC disposed within the switch device, the ASIC including switching componentry and associated therewith, one or both of an egress test block and an ingress test block; whereby the switching componentry is disposed to receive or transmit a packet, and the egress test block and an ingress test block are respectively adapted to transmit and receive a test packet;
an ingress port communicating with the ASIC and being connectable to one or more external computer network devices, the ingress port being a substantially standard switch port;
an egress port communicating with the ASIC and being connectable to one or more external computer network devices, the egress port being a substantially standard switch port; and,
whereby the ASIC and one or both of an egress test block and an ingress test block are adapted to provide for alternatively operating in conventional switch mode and test mode.

2. A switch device according to claim 1 which includes a plurality of discrete egress ports; whereby the egress test block is adapted to generate discrete traffic patterns for each of the plurality of discrete egress ports.

3. A switch device according to claim 1 which includes one or both of an egress and an ingress test block and whereby in test mode, one or both of: the egress test block transmits a test packet through the egress port; and the ingress test block receives a test packet on the ingress port.

4. A switch device according to claim 1 which includes both an egress test block and an ingress test block and whereby in test mode, the egress test block transmits a test packet through the egress port, and the ingress test block receives a test packet through the ingress port.

5. A switch device according to claim 4 wherein the egress test block and the ingress test block operate in one or more of independently, co-operatively, co-operatively with partial support and co-operatively with full support.

6. A switch device according to claim 5 wherein one or both of the egress test block and the ingress test block operate under one or more of software control, user control and self-control

7. A switch device according to claim 6 wherein the egress test block and the ingress test block operate under self-control, and,
wherein the self-control includes communication between the egress test block and the ingress test block

8. A switch device according to claim 7 wherein the communication between the egress test block and the ingress test block includes one or more of communication from the egress test block to the ingress test block, communication from the ingress test block to the egress test block, or both

9. A switch device according to claim 7 wherein the communication be tween the egress test block and the ingress test block includes communication from the ingress test block to the egress test block, and
wherein the egress test block awaits a communication from the ingress test block before transmitting a test packet.

10. A switch device according to claim 9 wherein the egress test block and ingress test block operate in one of partial support and full support.

11. A switch device according to claim 1 wherein the ingress test block is adapted to validate the test packet, and whereby the validation is one of success/failure and pass/punt/drop.

12. A system of a two switch devices, each of said devices having the limitations of the switch device of claim 1; wherein the two switch devices are connected each one to each other via connections between the respective ingress and egress ports thereof, and wherein the ASICs of each switch device are adapted to both transmit and receive a packet to the other connected switch device via the connections between the respective ports thereof; and wherein the ASICs are adapted to transmit a test packet and to receive a test packet.

13. A method of operating a switch device having both switch and test capabilities, the method including:
establishing a mode of operation in either or both of a test mode and a switch mode; and, performing one or both of a testing operation and a switching operation.

14. A method according to claim 13 wherein the performing operation includes performing a testing operation and the testing operation includes one or both of:
transmitting test data; and,
receiving test data.

15. A method according to claim 14 wherein the switch device is a test switch device and the test switch device is connected to a switch device under test; whereby in the one or both operations of transmitting test data and receiving test data, either or both of the test data is generated by and transmitted by the test switchdevice to the switch device under test; and, the test data is received from the switch device under test by the test switch device.

16. A method according to claim 15 wherein the receiving of test data further includes checking the test packet, and whereby the checking operation includes a determination of one of: success or failure; and pass or punt or drop.

17. A method according to claim 13 wherein on operating a test capability of the switchdevice, the method comprises:
setting up the test functionality in the switch device, the test functionality including one or both of transmitting test data and receiving test data;
initiating the transmission of test data; and
checking the test data.

18. A method according to claim 17 wherein one or both of the operations of transmitting test data and receiving test data operate under one or more of software control, user control and self-control

19. A method according to claim 18 wherein one or both of the operations of transmitting test data and receiving test data operate under self-control, and,
wherein the self-control includes communication between the egress test block and the ingress test block.
